# EUROPÄISCHE PATENTANMELDUNG

(11) **EP 0 747 696 A2**
(43) Veröffentlichungstag der Anmeldung: **11.12.1996**
(21) Anmeldenummer: 96107721.1
(22) Anmeldetag: 15.05.1996
(51) Int. Cl.: G01N 27/407

(54) **Elektrochemischer Festelektrolyt-Sensor zur Messung von Chlor**

(30) Priorität: 16.05.1995 DE 19517907
(71) Anmelder: AUERGESELLSCHAFT GMBH, D-12059 Berlin (DE)
(72) Erfinder: Kroll, Alla, Dr., 10707 Berlin (DE); Mähl, Dieter, Dr., 13585 Berlin (DE)

(57) **Zusammenfassung**

Die Erfindung betrifft einen elektrochemischen Festelektrolyt-Sensor zur Messung von Chlor und ein Verfahren zur Herstellung des Sensors.

Die Aufgabe der Erfindung besteht darin, einen elektrochemischen Festelektrolyt-Sensor zu entwickeln, der eine verbesserte Signalstabilität aufweist und gegenüber den bekannten Festelektrolyt-Sensoren des Standes der Technik einfacher herzustellen ist.

Erfindungsgemäß wird die Aufgabe dadurch gelöst, daß ein Sensor entwickelt wurde, der bei normalen Umgebungstemperaturen nach dem amperometrischen Prinzip arbeitet, aus den Schichten Sensorelektrode (1), Festelektrolyt (2) und Gegenelektrode (3)aufgebaut wird. Die Kontakte für die Sensorelektrode und die Gegenelektrode sind in die Schichten Sensorelektrode (1) und Gegenelektrode (3) eingelagert. Der in die Schicht der Sensorelektrode (1) integrierte Kontakt wird als Diffusionsbarriere eingesetzt. In die Schichten der Sensorelektrode (1) und Gegenelektrode (3) ist Festelektrolyt eingelagert.
Nach dem erfindungsgemäßen Verfahren wird der Festelektrolyt-Sensor durch Kaltverpressen der Schichten (1) bis (3) in einer Form hergestellt.

## Beschreibung

Die Erfindung betrifft einen elektrochemischen Festelektrolyt-Sensor zur Messung von Chlor und ein Verfahren zur Herstellung dieses Sensors

Die Verwendung eines Festelektrolyt-Sensors zum Nachweis von Sauerstoff, z.B. in Kraftfahrzeugabgasen ist aus der Praxis bekannt. Aus der Patentliteratur ist ein Festelektrolyt-Sensor zur Bestimmung der Wasserstoffkonzentration in Gasgemischen bekannt (SU-PS 11 00 555). Ein Festelektrolyt-Sensor für ein elektrochemisches Meßgerät ist auch aus der SU-PS 67 05 66 bekannt. Diese bekannten Festelektrolyt-Sensoren weisen nur eine geringe Signalstabilität des Ausgangssignals des Sensors auf. Die Herstellung der Sensorelemente ist kompliziert und eine Reproduzierbarkeit der Eigenschaften nicht gewährleistet. Ein Verfahren und ein Festelektrolyt-Sensor zum Nachweis von Chlor sind aus der DE-OS 35 00 088 bekannt. Der in dieser Patentanmeldung offenbarte Festelektrolyt-Sensor, der nach dem potentiometrischen Prinzip arbeitet, benötigt eine Arbeitstemperatur von mindestens 160 °C, um entsprechende Ansprechzeiten zu gewährleisten. Bei normalen Umgebungstemperaturen ist ein praxisbezogener Einsatz dieses Festelektrolyt-Sensors nicht möglich. Nachteilig wirkt sich auch die komplexe Verfahrensweise zum Betreiben des Festelektrolyt-Sensors aus, die eine Stabilität der Empfindlichkeit des Sensors nicht gewährleisten kann.

Aufgabe der vorliegenden Erfindung war, einen elektrochemischen Festelektrolyt-Sensor zur Messung von Chlor zu entwickeln, der eine verbesserte Signalstabilität aufweist und der gegenüber den bekannten Festelektrolyt-Sensoren des Standes der Technik einfacher herzustellen ist.

Erfindungsgemäß wurde die Aufgabe dadurch gelöst, daß ein nach dem amperometrischen Prinzip arbeitender Festelektrolyt-Sensor zur Messung von Chlor entwickelt wurde, der bei Umgebungstemperaturen arbeitsfähig ist.

Der Festelektrolyt-Sensor besteht aus den drei Schichten Sensorelektrode, Festelektrolyt und Gegenelektrode, die nebeneinander angeordnet sind. Die Kontakte für die Sensorelektrode und die Gegenelektrode wurden in die jeweiligen Schichten der Elektroden integriert.

Nach dem erfindungsgemäßen Verfahren zur Herstellung eines elektrochemischen Festelektrolyt-Sensors zur Messung von Chlor werden die Schichten in eine Form gefüllt und kalt verpreßt. Weitere vorteilhafte Ausgestaltungen der erfindungsgemäßen Lösung ergeben sich aus den Unteransprüchen.

Die Erfindung wird anhand eines in der Zeichnung dargestellten Ausführungsbeispiels näher erläutert. Die Figur zeigt eine schematische Darstellung des erfindungsgemäßen elektrochemischen Festelektrolyt-Sensors zur Messung von Chlor. Der Festelektrolyt-Sensor besteht aus den Schichten Sensorelektrode (1), Festelektrolyt (2) und Gegenelektrode (3). Die Schichten sind nebeneinander angeordnet. In die Schicht der Sensorelektrode (1) ist der Kontakt integriert und in die Schicht der Gegenelektrode (3) der Kontakt. Der in die Schicht der Sensorelektrode (1) integrierte Kontakt wird gleichzeitig als Diffusionsbarriere eingesetzt. Die Schicht der Gegenelektrode (3) mit dem integrierten Kontakt besteht aus einem Gemisch, einer makrozyklischen Verbindung des Übergangsmetalles und eines leitfähigen Materials. In die Schicht der Sensorelektrode (1) und der Gegenelektrode (3) wird Festelektrolyt eingelagert. Die Schicht für den Festelektrolyten (2) besteht aus einem Material mit einer guten Leitfähigkeit für Protonen, z.B. Wolframatophosphorsäure-Hydrat, H₃ [P (W₃ O₁₀)₄] · x H₂O. Die Schicht der Sensorelektrode (1) mit dem integrierten Kontakt (5) besteht aus einem katalytisch aktiven und einem leitfähigen Material. Die Schicht der Sensorelektrode (1) besteht vorzugsweise aus einem Edelmetall.

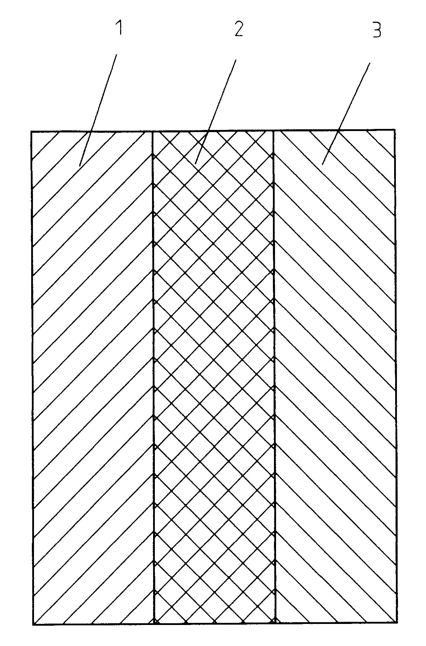

Zur Herstellung des Festelektrolyt-Sensors gemäß Figur 1 werden die Schichten (1) bis (3) in eine Form gefüllt und kalt verpreßt. Dazu werden die Schichten (1) - (3) nach ihrer Verfüllung in die Form jeweils kurz angepreßt und dann gemeinsam zu dem Festelektrolyt-Sensor verpreßt.

### Aufstellung der Bezugszeichen

- 1: Schicht der Sensorelektrode
- 2: Schicht des Festelektrolyten
- 3: Schicht der Gegenelektrode

## Patentansprüche

1. Elektrochemischer Festelektrolyt-Sensor zur Messung von Chlor dadurch gekennzeichnet, daß ein nach dem amperometrischen Prinzip bei Umgebungstemperaturen arbeitender Sensor aus den Schichten Sensorelektrode (1), Festelektrolyt (2) und Gegenelektrode (3) besteht, die nebeneinander angeordnet sind, der Kontakt für die Gegenelektrode in die Schicht der Gegenelektrode (3) integriert ist und der Kontakt für die Sensorelektrode in die Schicht der Sensorelektrode (1) integriert ist.

2. Elektrochemischer Festelektrolyt-Sensor gemäß Anspruch 1 dadurch gekennzeichnet, daß der in die Schicht der Sensorelektrode (1) integrierte Kontakt als Diffusionsbarriere eingesetzt wird.

3. Elektrochemischer Festelektrolyt-Sensor gemäß Anspruch 1 dadurch gekennzeichnet, daß die Schicht für die Gegenelektrode (3) mit dem integrierten Kontakt aus einem Gemisch, einer makrozyklischen Verbindung eines Übergangsmetalles und einem leitfähigen Material besteht.

4. Elektrochemischer Festelektrolyt-Sensor gemäß Anspruch 1 dadurch gekennzeichnet, daß in die Schicht der Sensorelektrode (1) und der Gegenelektrode (3) Festelektrolyt eingelagert ist.

5. Elektrochemischer Festelektrolyt-Sensor gemäß Anspruch1 dadurch gekennzeichnet, daß die Schicht für den Festelektrolyten (2) aus einem Material mit einer guten Leitfähigkeit für Protonen besteht.

6. Elektrochemischer Festelektrolyt-Sensor gemäß Anspruch 1 dadurch gekennzeichnet, daß die Schicht der Sensorelektrode (1) mit dem integrierten Kontakt aus einem katalytisch aktiven Material und einem leitfähigen Material besteht.

7. Verfahren zur Herstellung eines elektrochemischen Festelektrolyt-Sensors zur Messung von Chlor dadurch gekennzeichnet, daß die Schichten (1) bis (3) in eine Form gefüllt werden und kalt verpreßt werden.

8. Verfahren zur Herstellung eines elektrochemischen Festelektrolyt-Sensors gemäß Anspruch 7 dadurch gekennzeichnet, daß die Schichten (1) bis (3) jeweils kurz angepreßt und dann gemeinsam verpreßt werden.
